# NEUE EUROPÄISCHE PATENTSCHRIFT

(11) **EP 0 351 570 B2**
(45) Veröffentlichungstag und Bekanntmachung des Hinweises auf die Entscheidung über den Einspruch: **29.09.1999**
(45) Hinweis auf die Patenterteilung: 29.12.1993
(21) Anmeldenummer: 89111258.3
(22) Anmeldetag: 21.06.1989
(51) Int. Cl.: F16L 55/16, B29C 63/34, B29C 63/28

(54) **Verfahren zum Auskleiden eines im Erdreich verlegten Leitungsrohres**
Process for lining a conduit lying in the soil
Procédé de revêtement d'une conduite enterrée

(30) Priorität: 21.07.1988 DE 8809305 U; 27.02.1989 DE 3906057
(43) Veröffentlichungstag der Anmeldung: 24.01.1990
(73) Patentinhaber: Müller, Hans, D-32816 Schieder-Schwalenberg (DE)
(72) Erfinder: Müller, Hans, D-4938 Schieder-Schwalenberg (DE); Suerbaum, Hermann, D-4938 Schieder-Schwalenberg (DE)
(74) Vertreter: Stracke, Alexander, Dipl.-Ing.

(56) Entgegenhaltungen:
- EP-A- 0 007 086
- EP-A- 0 060 670
- EP-A- 0 101 340
- EP-A- 0 205 621
- EP-A- 0 209 396
- EP-A- 0 228 998
- BE-A- 904 833
- DE-A- 3 614 963
- FR-A- 619 915
- GB-A- 1 449 455
- GB-A- 1 569 675
- GB-A- 2 018 384
- SE-A- 310 822
- US-A- 23 317
- US-A- 2 944 994
- US-A- 3 329 173
- US-A- 3 709 866
- US-A- 4 009 063
- US-A- 4 081 303
- US-A- 4 770 562

## Beschreibung

Die Erfindung bezieht sich auf ein Verfahren zum Auskleiden eines im Erdreich verlegten Leitungsrohres, vorzugsweise eines aus Beton, Asbestzement oder Steinzeug gefertigten Abwasserkanals, unter Verwendung eines wenigstens eine Schicht aus einem Faservlies aufweisenden Auskleideschlauchs, dessen Faservliesschicht mit einem aushärtbaren Kunstharz getränkt, der Auskleideschlauch in das Leitungssrohr eingeführt, mit einem Druckmedium an die Innenfläche des zu sanierenden Leitungsrohres angepreßt und das Kunstharz ausgehärtet wird.

Es ist ein Verfahren dieser Art bekannt (DE-PS 22 40 153), bei dem die Auskleidung an der Außenseite mit einer flüssigkeitsundurchlässigen Schicht versehen ist. Durch diese undurchlässige Schicht soll eine vorherige Reinigung der Rohrleitung entfallen. Es hat sich jedoch herausgestellt, daß eine gründliche Reinigung notwendig ist, da in einer alten Rohrleitung immer Ablagerungen vorhanden sind, die einen großen Teil des Strömungsquerschnittes ausfüllen können.

Da durch die flüssigkeitsundurchlässige Außenschicht eine Verbindung der Auskleidung mit der Innenwand der Rohrleitung nicht erfolgen kann, werden undichte Stellen, wie z.B. Risse oder schadhafte Rohrverbindungen, nicht abgedichtet, so daß aus dem Erdreich eindringendes Wasser sich in den zwischen der Auskleidung und der Innenwandung des Kanals liegenden Ringraum sammelt. Über Seiteneinläufe und Hausanschlüsse - die bei jeder Art von Auskleidung nach erfolgter Installation aufgefräst werden müssen - kann Grundwasser trotz neuer Auskleidung in das Leitungsrohr infiltrieren oder umgekehrt Abwasser in das umgebende Erdreich exfiltrieren. Eine Festlegung der Auskleidung in der Rohrleitung gegen eine Verschiebung in Längsrichtung ist nicht zu erreichen. Einbindungen von Hausanschlüssen können nach dem bekannten Verfahren nicht wasserdicht ausgeführt werden. Es kommt zu Hinterfliessungen zwischen der eingebrachten Auskleidung und dem liegenden Rohr. Längenausdehnungen des ausgehärteten Schlauches können zumindest teilweise Seiteneinläufe und Hausanschlüsse versperren.

Der Auskleideschlauch weist auch auf der Innenseite eine harzundurchlässige Schicht auf.

Es ist ferner ein Verfahren bekannt (DE-PS 23 62 784), bei dem der in die zu sanierende Rohrleitung eingebrachte Auskleideschlauch innen eine harzundurchlässige Schicht und außen eine mit Kunstharz getränkte Schicht aufweist. Dieser Auskleideschlauch wird durch Umstülpen in die Rohrleitung eingebracht, wobei die zunächst innen liegende. mit Kunstharz getränkte Schicht nach außen gelangt. Für das Umstülpen des Zweischichtenauskleideschlauches werden bedingt durch die zu verrichtende Walkarbeit im Umstülpbereich relativ große Kräfte benötigt. Durch diese Walkarbeit wird Harz aus der imprägnierten Faserschicht herausgepreßt und zwangsläufig durch Luft ersetzt.

Bei beiden bekannten Verfahren wird ein Auskleideschlauch verwendet, der ausschließlich eine mit härtbarem Kunstharz getränkte Faservliesschicht aufweist, so daß man sich für eine Kunstharzart entscheiden muß. Das bisher bekannte preisgünstige Polyesterharz hat den Nachteil, daß es mit der feuchten Innenseite des zu sanierenden Leitungsrohres keine Klebeverbindung eingeht und während der Aushärtung so stark schrumpft, daß sich zwischen dem zu sanierenden Leitungsrohr und dem Auskleideschlauch ein Ringspalt bildet, der sich dann mit Wasser aus dem Erdreich füllt, das durch Bruchstellen des Altrohres in den Ringraum einfließt und über Hausanschlüsse und Seiteneinläufe in das sanierte Leitungsrohr eindringt. Umgekehrt kann Abwasser über die gleichen Fließwege in das umgebende Erdreich exfiltrieren.

Der Erfindung liegt die Aufgabe zugrunde, ein Verfahren zum Sanieren einer im Erdreich verlegten Rohrleitung der eingangs genannten Art so auszubilden, daß mit einer relativ geringen Menge an gut haftendem, spannungsfrei aushärtendem Kunstharz eine intensive Haftverbindung zwischen dem Auskleideschlauch und der zu sanierenden Rohrleitung erreicht werden kann.

Diese Aufgabe wird durch die im kennzeichnenden Teil des Patentanspruches 1 herausgestellten Verfahrensschritte gelöst.

Da der verwendete Auskleideschlauch aus einer Außenschicht und einer Innenschicht aus jeweils einem Faservlies und aus einer zwischen den genannten Schichten angeordneten, flüssigkeitsundurchlässigen, dünnen Sperrschicht gebildet wird, kann durch die Wahl der Dicke der Außenschicht auch die Menge des an der Innenfläche des Altrohres gut haftenden und spannungsfrei aushärtenden Kunstharzes beeinflußt werden. Ein Kunstharz,der an den Innenflächen der im Erdreich verlegten Altrohre gut haftet und spannungsfrei aushärtet, ist Epoxidharz.

Die aus einem Faservlies bestehende Innenschicht des Auskleideschlauches wird mit einem Polyesterharz getränkt, dem ein chemisches Mittel zugesetzt wird, durch das die Schrumpfung beim Aushärten des Polyesterharzes bis auf 0,3 Prozent oder weniger herabgesetzt wird.

Durch die Verwendung dieser Kunstharzarten wird erreicht, daß der an die Innenwandung der zu sanierenden Rohrleitung angepreßte Auskleideschlauch auch während der Aushärtung der Kunstharze formstabil bleibt und ein Ringspalt zwischen dem Auskleideschlauch und dem Altrohr nicht entstehen kann. Das Kunstharz der Außenschicht geht eine Klebeverbindung mit dem Altrohr ein, so daß das Altrohr und der Auskleideschlauch eine Einheit bilden, deren Statik weitgehend vom Altrohr mitbestimmt wird.

Der beim erfindungsgemäßen Verfahren verwendete Auskleideschlauch kann so behandelt werden wie ein ausschließlich aus Filz gefertigter Schlauch. Die Außen- und die Innenschicht werden vor dem Einziehen des Auskleideschlauches in das zu sanierende Leitungsrohr mit Harz getränkt. Da die zwischen der jeweils aus einem Faservlies bestehenden Außenschicht und der Innenschicht vorgesehene flüssigkeitsundurchlässige, dünne Sperrschicht beim Einziehen des Auskleideschlauches in das zu sanierende Rohr durch die Außenschicht geschützt wird, kann sie extrem dünn ausgebildet werden. Das die Außenschicht bildende Faservlies muß nur so dick sein, daß es eine für die Verbindung mit dem Altrohr notwendige Menge Harz aufnehmen kann.

Unter Bezugnahme auf die beigefügten Zeichnungen wird das erfindungsgemäße Verfahren näher erläutert. Es zeigen:
- Fig. 1: ein Teilstück einer im Erdreich verlegten, mittels eines Auskleideschlauches sanierten Rohrleitung im Längsschnitt und
- Fig.2: ebenfalls in einer Längsschnittdarstellung das Aufweiten des Auskleideschlauches durch Einstülpen eines Kalibrierschlauches sowie
- Fig. 3: ein weiteres Teilstück eines Abwasserkanals mit eingebrachten Auskleideschlauch.

Die im Erdreich verlegte Rohrleitung 1, die mit einem Bruchspalt 2 und einer weiteren Bruchstelle 3 versehen ist und auch einen Hausanschluß 4 aufweist, wurde nach dem erfindungsgemäßen Verfahren mit einem Auskleideschlauch 5 ausgerüstet. Dieser Auskleideschlauch weist eine Außenschicht 6 und eine Innenschicht 7 auf, die jeweils aus einem Faservlies , z.B. einem Filz, bestehen. Zwischen der Außenschicht und der Innenschicht ist eine Sperrschicht 8 angeordnet, die aus einer Schlauchfolie mit geringer Dicke von z.B. 0,5 mm bestehen und aus Kunststoff gefertigt sein kann. Die Schlauchfolie kann aus Polyäthylen,Polypropylen oder Polyurethan gefertigt werden.

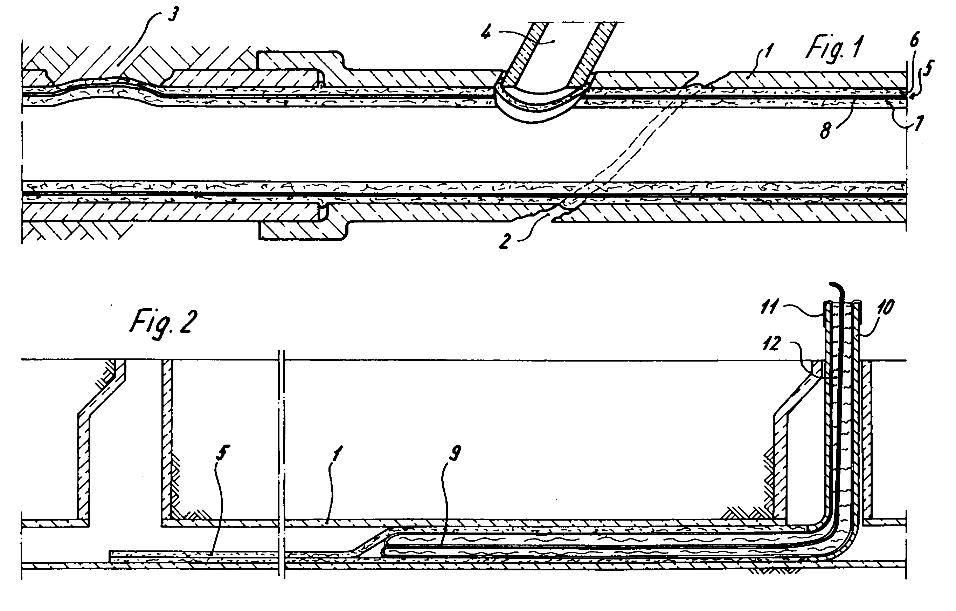

In dem in der Fig. 1 aufgezeigten Ausführungsbeispiel weist die Außenschicht 6 ca. ein Drittel der Wandstärke des Auskleideschlauches 5 und die Innenschicht 7 etwa zwei Drittel der Wandstärke des Auskleideschlauches 5 auf.

Als Faservlies für die Außen- und für die Innenschicht kann ein Polyestervlies oder ein Glasfaservlies oder eine Kombination aus Polyesterfasern und Glasfasern verwendet werden.

Als Sperrschicht 8 kann eine Folie verwendet werden, die durch Thermofixierung beidseitig mit dem Innen-und Außenfilz einen Verbund bildet. Es kann auch ein im Schmelzzustand auf die innere Faserschicht aufgetragener Thermoplast die Sperrschicht 8 bilden und die äußere Filzlage durch Thermofixierung mit dieser Sperrschicht zur Haftung gebracht werden.

Aus der Fig. 2 ergibt sich, daß der Auskleideschlauch 5 in flachgelegtem Zustand in die zu sanierende Rohrleitung 1 z.B. mittels eines Seiles und einer Winde eingebracht wird. Das Aufweiten des Auskleideschlauches erfolgt durch einen Kalibrierschlauch, der durch ein Inversionsrohr 10 in den Innenraum des Auskleideschlauches 5 eingestülpt wird. Der Schlauchrand 11 wird am oberen Rand des Inversionsrohres 10 festgelegt. Als Druckmedium für den Einstülpvorgang und für das Anpressen des Auskleideschlauches 5 an die Innenflächen des Leitungsrohres 1 wird Wasser 12 benutzt, das aufgeheizt wird, sofern die Tränkung der Faservliesschichten mit Kunstharzsystemen erfolgt, ist, die under Wärmeeinfluß aushärten.

Nach dem Aushärten der Harzsysteme kann der Kalibrierschlauch 9, der nur ein Hilfswerkzeug bildet, aus dem Auskleideschlauch 5 entfernt und wieder verwendet werden.

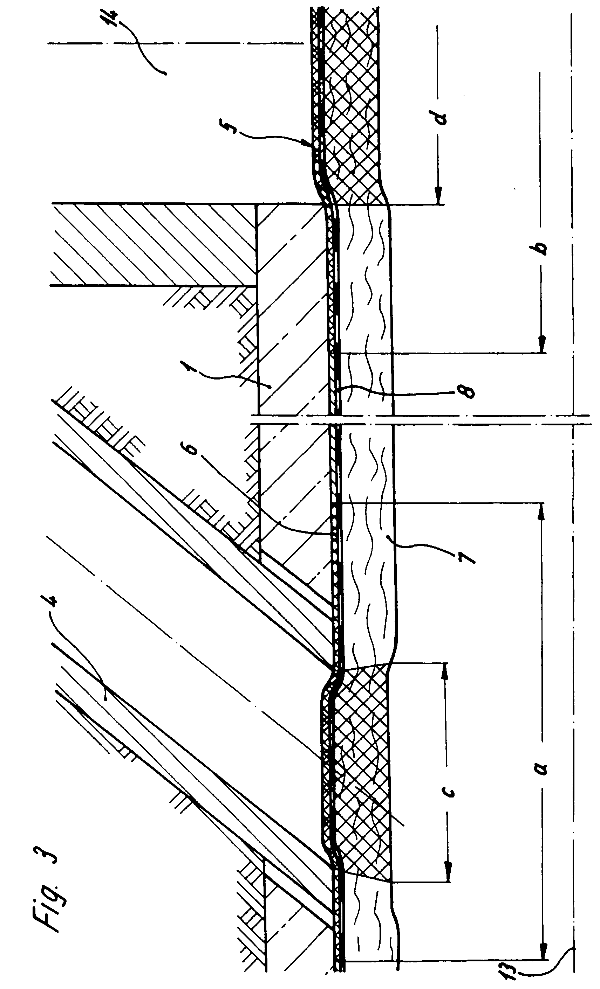

Bei dem Ausführungsbeispiel nach der Fig.3 ist der Mittellinie der Rohrleitung das Bezugszeichen 13 zugeordnet. Der in die Rohrleitung eingebrachte Auskleideschlauch weist eine Außenschicht 6 auf, die so dünn gewählt ist, daß sie für die statische Berechnung einer ausgehärteten Auskleidung unerheblich ist, aber dennoch als Aufnahme/Haftgrund für eine Tränkung mit Epoxidharz ausreicht.

Eine solche Variante ist dann besonders sinnvoll, wenn die Faservliesschicht 6 nur in Zonen mit Harz getränkt wird, in denen Seiteneinläufe 4 und Schächte 14 vorgesehen sind. Die Herstellung einer innigen Verbindung der Auskleidung mit dem Altrohr in diesen Zonen ist deshalb wichtig, weil an diesen Stellen eine Exfiltration von Abwasser oder eine Infiltration von Grundwasser erfolgen kann.

Eine derartige Variante ist in der Fig. 3 dargestellt. Die Außenschicht 6 ist ausschließlich in den Zonen a und b mit Harz getränkt.

Die Bereiche c und d der Auskleidung werden nach dem Aushärten der Auskleidung freigefräst.

## Patentansprüche

1. Verfahren zum Auskleiden eines im Erdreich verlegten Leitungsrohres, vorzugsweise eines aus Beton, Asbestzement oder Steinzeug gefertigten Abwasserkanals, unter Verwendung eines wenigstens eine Schicht aus einem Faservlies aufweisenden Auskleideschlauches, dessen Faservliesschicht mit einem aushärtbaren Kunstharz getränkt, der Auskleideschlauch in des Leitungsrohr eingeführt, mit einem Druckmedium an die Innenfläche des zu sanierenden Leitungsrohres angepreßt und des Kunstharz ausgehärtet wird, **dadurch gekennzeichnet,** daß außerhalb des auszukleidenden Rohres oder Kanals der Auskleideschlauch (5) aus einer Außenschicht (6) und einer Innenschicht (7) aus jeweils einem Faservlies und aus einer zwischen den genannten Schichten angeordneten, flüssigkeitsundurchlässigen, dünnen Sperrschicht (8) gebildet, die Außenschicht (6) in einer oder mehreren Zonen oder auf der gesamten Länge mit einem an den Rohr- und Kanalwerkstoffen gut haftenden, spannungsfrei härtenden Kunstharz, vorzugsweise mit einem Epoxidharz, und die Innenschicht (7) mit einem Polyesterharz getränkt wird und dem Polyesterharz ein die Schrumpfung bis auf 0,3 % oder weniger herabsetzendes chemisches Mittel zugesetzt wird.

2. Verfahren nach Anspruch 1, dadurch gekennzeichnet, daß als Sperrschicht (8) eine Folie verwendet wird, die durch Thermofixierung beidseitig mit dem Innen- und Außenfilz einen Verbund bildet, oder daß ein im Schmelzzustand auf die innere Faserschicht aufgetragener Thermoplast die Sperrschicht (8) bildet, und die äußere Filzlage durch Thermofixierung mit dieser Sperrschicht zur Haftung gebracht wird.

3. Verfahren nach Anspruch 2, dadurch gekennzeichnet, daß für beide Varianten Thermoplaste, beispielsweise Polyäthylen, Polypropylen oder Polyurethan verwendet werden.

4. Verfahren nach einem der vorhergehenden Ansprüche, dadurch gekennzeichnet, daß ein Auskleideschlauch mit einer Außenschicht (6), die ca. ein Drittel der Wandstärke des Auskleideschlauches (5) und mit einer Innenschicht (7), die ca. zwei Drittel der Wandstärke des Auskleideschlauches (5) aufweist, verwendet wird.

5. Verfahren nach einem der Ansprüche 1 bis 4, dadurch gekennzeichnet, daß als Faservlies ein Polyestervlies oder ein Glasfaservlies oder eine Kombination aus Polyesterfasern oder Glasfasern verwendet wird.

6. Verfahren nach einem der Ansprüche 1 bis 5, dadurch gekennzeichnet, daß die äußere Faserschicht so dünn gewählt wird, daß sie für die statische Berechnung einer ausgehärteten Auskleidung unerheblich ist, aber dennoch als Aufnahme/Haftgrund für eine Tränkung mit Epoxidharz ausreicht.

## Claims

1. A process for lining a conduit which is laid in the ground, preferably a sewer made from concrete, asbestos cement or brickwork, using a lining tube which has at least one layer of a fibre fleece, and the fibre fleece layer of which is impregnated with a hardenable synthetic resin, the lining tube is introduced into the conduit, and pressed with a pressure medium against the inside surface of the conduit to be renovated, and the synthetic resin is hardened, characterised in that outside the pipe or duct to be lined the lining tube (5) is formed from an outer layer (6) and an inner layer (7) each comprising a fibre fleece and a thin fluid-impermeable barrier layer (8) arranged between said layers, the outer layer (6) is impregnated in one or more zones or over the entire length with a synthetic resin which hardens in a stress-free condition and which has good adhesion to the pipe and duct materials, preferably an epoxy resin, and the inner layer (7) is impregnated with a polyester resin, and a chemical agent for reducing shrinkage to 0.3% or less is added to the polyester resin.

2. A process according to claim 1, characterised in that a foil which by thermofixing on both sides forms a bond with the inner or outer felts is used as the barrier layer (8), or that a thermoplastic material which is applied in the molten condition to the inner fibre layer forms the barrier layer (8), and the outer felt layer is caused to adhere to said barrier layer by thermofixing.

3. A process accoding to claim 2, characterised in that for example polyethylene, polypropylene, or polyurethane are used for both alternative forms.

4. A process according to one of the preceding claims, characterised in that a lining tube having an outer layer (6) which is about one third of the wall thickness of the lining tube (5) and an inner layer (7) which is about two thirds of the wall thickness of the lining tube (5) is used.

5. A process according to one of claims 1 to 4, characterised in that the fibre fleece used is a polyester fibre fleece or a glass fibre fleece or a combination of polyester fibres or glass fibres.

6. A process according to one of claims 1 to 5, characterised in that the outer fibre layer is selected to be so thin that it is insignificant for static calculation of a hardened lining but nonetheless is sufficient as a receiving means/bonding base for impregnation with epoxy resins.

## Revendications

1. Procédé de chemisage d'une conduite enterrée, de préférence d'un canal d'eaux d'égouts en béton, en amiante-ciment ou en grés vitrifié, utilisant au moins une couche constituée d'un tuyau de chemisage comportant un non-tissé, dont la pellicule de non-tissé est imbibée d'une résine synthétique durcissable, le tuyau de chemisage étant introduit dans la conduite, puis appliqué, à l'aide d'un fluide sous pression sur la paroi intérieure de la conduite à assainir et la résine synthétique étant laissée à durcir, caractérisé en ce qu'à l'extérieur du tuyau ou du canal destiné à être habillé, le tuyau de chemisage (5) est formé d'une couche extérieure (6) et d'une couche intérieure (7) constituées respectivement d'un non-tissé et d'une fine couche formant barrage (8) ne laissant pas passer les liquides, disposée entre lesdites couches, en ce que la couche extérieure (6), dans une ou plusieurs zones ou sur toute sa longueur, est imbibée d'une résine synthétique durcissant sans tension et adhérant bien sur les matériaux constitutifs du tuyau ou du canal, de préférence d'une résine époxy, en ce que la couche intérieure (7) est imbibée d'une résine polyester et en ce qu'on ajoute à à la résine époxy un produit chimique réduisant le retrait jusqu'à 0,3 %, ou moins.

2. Procédé selon la revendication 1, caractérisé en ce que, comme couche formant barrage (8), on utilise une pellicule qui, par thermofixage bilatéral avec le feutre intérieur et extérieur, forme un composite, ou en ce qu'une matière thermoplastique, appliquée en fusion sur la couche de fibres intérieure, forme la couche formant barrage (8) et la couche de feutre extérieure est amenée à adhérer avec cette couche formant barrage par thermofixage.

3. Procédé selon la revendication 2, caractérisé en ce que, pour les deux variantes, des matières thermoplastiques sont utilisées, comme par exemple du polyéthylène, du polypropylène ou du polyuréthane.

4. Procédé selon l'une des revendications précédentes, caractérisé en ce qu'on utilise un tuyau de chemisage avec une couche extérieure (6) qui représente environ un tiers de l'épaisseur de la paroi du tuyau de chemisage (5) et avec une couche intérieure (7) qui représente environ deux tiers de l'épaisseur de la paroi du tuyau de chemisage (5).

5. Procédé selon l'une des revendications 1 à 4, caractérisé en ce qu'on utilise, comme non-tissé, un non-tissé de polyester ou de fibres de verre, ou une combinaison de fibres polyester ou de fibres de verre.

6. Procédé selon l'une des revendications 1 à 5, caractérisé en ce que l'épaisseur de la couche extérieure de fibres est peu importante, de telle sorte qu'elle est négligeable dans le calcul statique d'un chemisage durci, mais qu'elle est suffisante, cependant, pour servir de couche d'absorption/d'adhérence lorsqu'on l'imbibe de résine époxy.
